# EUROPÄISCHE PATENTSCHRIFT

(11) **EP 4 282 252 B1**
(45) Veröffentlichungstag und Bekanntmachung des Hinweises auf die Patenterteilung: **06.05.2026**
(21) Anmeldenummer: 23161951.1
(22) Anmeldetag: 15.03.2023
(51) Int. Cl.: A01D 69/06

(54) **LANDWIRTSCHAFTLICHE BALLENPRESSE MIT EINER SPANNEINRICHTUNG FÜR EINEN ZUGMITTELTRIEB**
AGRICULTURAL BALER WITH A TENSIONING DEVICE FOR A TRACTION MECHANISM DRIVE
PRESSE À BALLES AGRICOLE DOTÉE D'UN DISPOSITIF DE SERRAGE POUR UN ENTRAÎNEMENT À MOYEN DE TRACTION

(30) Priorität: 25.05.2022 DE 102022113276
(43) Veröffentlichungstag der Anmeldung: 29.11.2023
(73) Patentinhaber: Usines CLAAS France S.A.S, 57140 St. Rémy / Woippy (FR)
(72) Erfinder: Fuchs, Volker, 54439 Saarburg (DE); Gaucher, Emile, 52170 CHEVILLON (FR); Mörsch, Daniel, 66706 Perl (DE); Walter, Thierry, 57050 Longeville-lès-Metz (FR)
(74) Vertreter: CLAAS Gruppe

(56) Entgegenhaltungen:
- US-A- 4 257 219
- US-A- 5 367 865
- US-A- 5 622 104
- US-A1- 2013 298 787

## Beschreibung

Die vorliegende Anmeldung betrifft eine landwirtschaftliche Ballenpresse mit mindestens einem Zugmitteltrieb zum Antreiben von Arbeitsaggregaten der landwirtschaftlichen Ballenpresse gemäß dem Oberbegriff des unabhängigen Patentanspruchs 1 sowie eine Kombination aus einer landwirtschaftlichen Arbeitsmaschine, insbesondere einem Traktor, und einer von dieser gezogenen solchen landwirtschaftlichen Ballenpresse gemäß dem Oberbegriff des unabhängigen Patentanspruchs 13.

Bei landwirtschaftlichen Ballenpressen werden für den Antrieb der einzelnen Arbeitsaggregate bzw. Funktionsbaugruppen sogenannte Zugmitteltriebe verwendet, die wahlweise als Riementrieb oder Kettentrieb ausgebildet sein können und eine der Maschinenleistung entsprechende Antriebskraftübertragung gewährleisten müssen. Um dies kontinuierlich und auch dann, wenn erschwerte Erntebedingungen vorliegen, zu ermöglichen, ist es notwendig, das Zugmittel des Zugmitteltriebs mit einer notwendigen Spannung zu beaufschlagen. Dies wird durch eine dem Zugmitteltrieb zugeordnete Spanneinrichtung realisiert. Während des Betriebs der landwirtschaftlichen Ballenpresse erfährt das Zugmittel des Zugmitteltriebs eine sukzessive Längung, die in gewissem Maße zulässig ist, jedoch dazu führt, dass sich die Spannung im Zugmittel des Zugmitteltriebs entsprechend verändert, insbesondere verringert. Um die für die Antriebskraftübertragung notwendige Spannung des Zugmittels aufrechtzuerhalten ist es demnach erforderlich, während des Betriebs der landwirtschaftlichen Ballenpresse die durch die Spanneinrichtung aufgebrachte Spannkraft entsprechend nachzustellen.

Aus der EP 0 126 808 B1 ist in diesem Zusammenhang beispielsweise eine federbelastete Spanneinrichtung für einen Keilriementrieb bekannt, bei der eine Druckfeder mit einer Vorspanneinrichtung die Spannkraft über eine Zugstange auf einen schwenkbaren Doppelhebel überträgt. Am anderen Ende des Doppelhebels ist eine Keilriemenspannrolle gelagert, die auf den zu spannenden Keilriemen derart einwirkt, dass die für die Antriebskraftübertragung erforderliche Keilriemenspannung vorhanden ist. Die Druckfeder ist an einer Federhalterung zwischen Widerlagern an der Zugstange und einer mit dem Maschinenrahmen verbundenen festen Halterung angeordnet. Die jeweils erforderliche Vorspannung der Druckfeder wird durch Drehen der Widerlager an der Zugstange eingestellt. Ein Nachstellen der aufzubringenden Spannkraft während des Betriebs des Riementriebs wird ebenfalls über ein Drehen der Widerlager realisiert.

Weitere Spanneinrichtungen für Zugmitteltriebe sind grundsätzlich aus der US 5,622,104 A, der US 2013/298787 A1, der US 5,367,865 A sowie der US 4,257,219 A bekannt.

Aufgrund der sukzessiven Längung des Keilriemens während des Betriebs des Keilriementriebs ist es bei einer derartigen Spanneinrichtung notwendig, dass ein Bediener über ein Drehen der Widerlager die über die Spanneinrichtung aufgebrachte Spannkraft in regelmäßigen Abständen manuell nachstellt. Ein derartiger Vorgang ist für den Bediener mit einem erheblichen zeitlichen Aufwand verbunden und erfordert das Aufbringen hoher Kräfte zur Einstellung der Spannkraft, was für den Bediener als körperlich sehr belastend wahrgenommen wird. Weiterhin ist die Verwendung einer solchen Spanneinrichtung mit einem hohen Herstellungsaufwand verbunden, da eine Vielzahl von Einzelteilen benötigt wird, deren Herstellung und Montage wiederum hohe Herstellungskosten verursachen.

Ausgehend von dem vorstehend beschriebenen Stand der Technik ist es demnach die Aufgabe der vorliegenden Erfindung, eine landwirtschaftliche Ballenpresse mit mindestens einem Zugmitteltrieb anzugeben, bei dem die Einstellung einer über eine Spanneinrichtung auf das Zugmittel des mindestens einen Zugmitteltriebs aufgebrachte Spannkraft vereinfacht erfolgt, somit der erforderliche Zeit- und Kraftaufwand gesenkt wird.

Diese Aufgabe wird erfindungsgemäß durch die Merkmale des unabhängigen Patentanspruchs 1 gelöst, wobei vorteilhafte Weiterbildungen der erfindungsgemäßen landwirtschaftlichen Ballenpresse Gegenstand der entsprechenden abhängigen Patentansprüche 2 bis 12 sind.

Demnach betrifft die vorliegende Erfindung eine landwirtschaftliche Ballenpresse mit mindestens einem Zugmitteltrieb zum Antreiben von Arbeitsaggregaten der landwirtschaftlichen Ballenpresse. Dem Zugmitteltrieb ist mindestens eine Spanneinrichtung zugeordnet, wobei die mindestens eine Spanneinrichtung ein Spannglied zum Einstellen einer mittels der Spanneinrichtung auf ein Zugmittel des mindestens einen Zugmitteltriebs ausgeübten Spannkraft umfasst. Die landwirtschaftliche Ballenpresse ist dadurch gekennzeichnet, dass das Spannglied eine Kolben-Zylinder-Einheit umfasst, wobei ein Kolben der Kolben-Zylinder-Einheit direkt oder über einen zusätzlichen Hebel indirekt mit einem Spannmittel der Spanneinrichtung verbunden ist, über das die Spannkraft auf das Zugmittel des mindestens einen Zugmitteltriebs aufgebracht wird, wobei der Kolben-Zylinder-Einheit zum Einstellen der auf das Zugmittel ausgeübten Spannkraft ein Schmierstoff, vorzugsweise ein Schmierfett, zuführbar ist.

Durch die Beauftragung der Kolben-Zylinder-Einheit mit einem Schmierstoff aus einem Schmierstoffvorrat ist es möglich, die für den ordnungsgemäßen Betrieb des Zugmitteltriebs notwendige Spannkraft durch die Spanneinrichtung in besonders unkomplizierter Art und Weise aufzubringen. Einem Zylinderraum, der durch eine Innenwandung des Zylinders und eine Stirnfläche des Kolbens ausgebildet wird, kann eine Menge an Schmierstoff mit einem bestimmten Druck zugeführt werden, wodurch sich der Kolben im Zylinder derart verlagert, dass über das Spannmittel der Spanneinrichtung eine Spannkraft auf das Zugmittel des Zugmitteltriebs übertragen wird. Diese Spannkraft sorgt dafür, dass das Zugmittel des Zugmitteltriebs stets in einem ausreichend gespannten Zustand vorliegt, so dass eine Antriebskraftübertragung von einem Antrieb des Zugmitteltriebs über das Zugmittel auf einen Abtrieb des Zugmitteltriebs stets zuverlässig und in gewünschtem Maße erfolgt.

Es ist nicht mehr nötig, dass ein Bediener aufwendig etwaige Widerlager bzw. Muttern über eine manuelle Betätigung verstellt, um somit die Spannkraft einer Spanneinrichtung einzustellen oder nachzustellen. Die Nutzung eines eine Kolben-Zylinder-Einheit umfassenden Spannglieds sorgt ferner dafür, dass der Aufwand bei der Herstellung der Spanneinrichtung und Kosten durch die Herstellung und Montage einer Vielzahl von einzelnen Bauteilen reduziert wird.

Erfindungsgemäß ist vorgesehen, dass die Kolben-Zylinder-Einheit einen Schmierstoffeinlass zum Zuführen des Schmierstoffs umfasst, wobei der Schmierstoffeinlass ein Rückschlagventil umfasst.

Hierdurch wird sichergestellt, dass nach einem Einstellen der durch die Spanneinrichtung auf das Zugmittel aufgebrachten Spannkraft durch ein Zuführen des Schmierstoffs derselbe nicht wieder auf unerwünschte Art und Weise über den Schmierstoffeinlass aus dem Zylinderraum der Kolben-Zylinder-Einheit entweicht, wodurch eine bereits eingestellte Spannkraft von der Spanneinrichtung nicht aufrechterhalten würde, was wiederum zu einem unzureichenden Spannungszustand des Zugmittels des Zugmitteltriebs führen würde. Sobald der Zuführvorgang des Schmierimpfstoffs in die Kolben-Zylinder-Einheit abgeschlossen ist, verschließt das Rückschlagventil das Schmierstoffeinlassventil der Kolben-Zylinder-Einheit, so dass die eingestellte Spannkraft aufrechterhalten werden kann.

Vorzugsweise ist das Rückschlagventil des Schmierstoffeinlasses als steuerbares Rückschlagventil ausgebildet.

Die Verwendung eines steuerbaren Rückschlagventils erlaubt es, den notwendigen Druck zum Betätigen des Rückschlagventils variabel einzustellen. Weiterhin ist es möglich das Rückschlagventil über eine Ansteuerung entgegen der normalen Funktionsweise des Rückschlagventils aus der Schließstellung in die Offenstellung zu verlagern, um beispielsweise in dem Zylinderraum der Kolben-Zylinder-Einheit vorhandenen Schmierstoff bei einem Demontage- bzw. Wartungsvorgang besonders unkompliziert entfernen zu können.

Erfindungsgemäß ist vorgesehen, dass die landwirtschaftliche Ballenpresse ein zentrales Schmiersystem umfasst, welches mit dem Schmierstoffeinlass der Kolben-Zylinder-Einheit zum Zuführen des Schmierstoffs strömungstechnisch verbunden ist.

Die strömungstechnische Verbindung eines an der Ballenpresse vorhandenen zentralen Schmiersystems mit dem Schmierstoffeinlass der Kolben-Zylinder-Einheit erlaubt eine automatische Einstellung der Spannkraft der Spanneinrichtung. Sobald die landwirtschaftliche Ballenpresse in Betrieb genommen wird, wird über das zentrale Schmiersystem kontinuierlich Schmierstoff mit einem gewissen Druck in den Zylinderraum der Kolben-Zylinder-Einheit gefördert, wodurch sich der Kolben im Zylinder verlagert. Die Verlagerung des Kolbens führt weiterhin dazu, dass das mit dem Kolben in Verbindung stehende Spannmittel ebenfalls eine Verlagerung erfährt, die dazu führt, dass die Spannkraft über eine Kontaktfläche zwischen Spannmittel und Zugmittel des Zugmitteltriebs auf das Zugmittel übertragen wird. Der Bediener ist somit von einer Einstellung bzw. Nachstellung der Spannkraft der Spanneinrichtung entbunden.

Insbesondere umfasst das zentrale Schmiersystem zumindest einen Schmierstoffbehälter, eine Schmierstoffpumpe und eine Schmierstoffverteilereinheit. Die Schmierstoffpumpe ist strömungstechnisch sowohl mit dem Schmierstoffbehälter als auch mit der Schmierstoffverteilereinheit verbunden. Die Schmierstoffverteilereinheit umfasst einen Schmierstoffeinlass, der mittels einer Schmierstoffhauptleitung mit der Schmierstoffpumpe strömungstechnisch verbunden ist, und mindestens zwei Schmierstoffauslässe. Ein Schmierstoffauslass der mindestens zwei Schmierstoffauslässe ist über eine Schmierstoffverteilleitung mit dem Schmierstoffeinlass der Kolben-Zylinder-Einheit strömungstechnisch verbunden.

Durch diese Ausgestaltung ist es möglich ein an der landwirtschaftlichen Ballenpresse vorhandenes zentrales Schmiersystem besonders einfach mit der Spanneinrichtung zu koppeln, um die von dieser Spanneinrichtung aufgebrachte Spannkraft zu erzeugen. Es müssen keine komplizierten und aufwendigen Umbaumaßnahmen an der landwirtschaftlichen Ballenpresse getroffen werden. Vielmehr kann eine von der Schmierstoffverteilereinheit des zentralen Schmiersystems ausgehende Schmierstoffverteilleitung mit dem Schmierstoffeinlass der Kolben-Zylinder-Einheit der Spanneinrichtung gekoppelt werden, wodurch die Versorgung der Kolben-Zylinder-Einheit der Spanneinrichtung mit Schmierstoff aus einem Schmierstoffbehälter des zentralen Schmiersystems gewährleistet ist.

Gemäß einer vorteilhaften Weiterbildung der Erfindung ist vorgesehen, dass die den Schmierstoffauslass der Schmierstoffverteilereinheit mit dem Schmierstoffeinlass der Kolben-Zylinder-Einheit verbindende Schmierstoffverteilleitung eine Zweigleitung umfasst, die sich, vorzugsweise unmittelbar, vor dem Schmierstoffeinlass der Kolben-Zylinder-Einheit von der Schmierstoffverteilleitung abzweigt. Die Zweigleitung ist mit mindestens einer Schmierstelle an der Spanneinrichtung, insbesondere einem Lagerpunkt des Spannmittels und/oder mindestens einem Lagerpunkt des zusätzlichen Hebels, strömungstechnisch verbunden.

Der ohnehin in der Schmierstoffverteilleitung vorhandenen Schmierstoff, der der Kolben-Zylinder-Einheit der Spanneinrichtung zum Einstellen der Spannkraft der Spanneinrichtung zugeführt wird, kann durch die Schaffung einer von dieser Schmierstoffverteilleitung abzweigenden Zweigleitung weiterhin dazu verwendet werden, die Schmierstellen an der Spanneinrichtung zu schmieren.

Vorzugsweise umfasst die Zweigleitung ein Rückschlagventil oder ein Druckbegrenzungsventil.

Sobald die notwendige Spannkraft über ein Zuführen des Schmierstoffs in den Zylinderraum erzeugt ist, kann eine überschüssige nicht benötigte Menge des Schmierstoffs, die kontinuierlich von dem zentralen Schmiersystems über die Schmierstoffverteilleitung gefördert wird, dazu genutzt werden, die zuvor erwähnten Schmierstellen mit Schmierstoff zu versorgen. Hierzu ist ein Rückschlag oder Druckbegrenzungsventil in der Zweigleitung vorgesehen, dass sich freigeschaltet, sobald die erforderliche Spannkraft der Spanneinrichtung erreicht ist, also ein weiteres Zuführen von Schmierstoff in den Zylinderraum der Kolben-Zylinder-Einheit nicht mehr notwendig ist.

Insbesondere ist das Rückschlagventil der Zweigleitung als steuerbares Rückschlagventil oder das Druckbegrenzungsventil der Zweigleitung als einstellbares Druckbegrenzungsventil ausgebildet.

Die Verwendung eines steuerbaren Rückschlagventils oder einstellbaren Druckbegrenzungsventils erlaubt es, den notwendigen Druck zum Betätigen des Rückschlagventils oder Druckbegrenzungsventils in Abhängigkeit der aufzubringenden Spannkraft variabel einzustellen.

Gemäß einer vorteilhaften Weiterbildung der Erfindung ist vorgesehen, dass zumindest ein weiterer Schmierstoffauslass der mindestens zwei Schmierstoffauslässe der Schmierstoffverteilereinheit mittels einer weiteren Schmierstoffverteilleitung mit einer Schmierstelle der landwirtschaftlichen Ballenpresse strömungstechnisch verbunden ist.

Das zentrale Schmiersystem kann somit, wie üblich vorgesehen, weiterhin für die Versorgung von Schmierstellen der landwirtschaftlichen Ballenpresse genutzt werden. In diesem Zusammenhang ist es möglich, dass eine oder mehrere der weiteren Schmierstoffverteilleitung, die von der Schmierstoffverteilereinheit ausgehen, mit einer weiteren Schmierstoffverteilereinheit strömungstechnisch verbunden ist, wobei von der weiteren Schmierstoffverteilereinheit wiederum weitere Schmierstoffverteilleitung zu verschiedenen Schmierstellen der landwirtschaftlichen Ballenpresse wegführen.

Gemäß einer vorteilhaften Weiterbildung der Erfindung ist vorgesehen, dass der Schmierstoffeinlass der Kolben-Zylinder-Einheit zum Zuführen des Schmierstoffs als Schmiernippel ausgebildet ist, wobei der Schmierstoff über den Schmiernippel mittels einer Fettpresse der Kolben-Zylinder-Einheit zuführbar ist.

Sofern an der landwirtschaftlichen Ballenpresse kein zentrales Schmiersystem vorhanden ist, kann die Einstellung der Spannkraft dennoch über die Zufuhr von Schmierstoff in den Zylinderraum der Kolben-Zylinder-Einheit erfolgen. Ein Bediener der landwirtschaftlichen Ballenpresse kann mittels einer Fettpresse, die an den Schmiernippel der Kolben-Zylinder-Einheit angesetzt wird, den in der Fettpresse vorhandenen Schmierstoff in den Zylinderraum der Kolben-Zylinder-Einheit führen, um somit die erforderliche Spannkraft, die durch die Spanneinrichtung auf das Zugmittel aufgebracht wird, einzustellen.

Gemäß einer vorteilhaften Weiterbildung der Erfindung ist vorgesehen, dass die Kolben-Zylinder-Einheit einen Schmierstoffauslass zum Abführen zumindest eines Teils des Schmierstoffs aus der Kolben-Zylinder-Einheit umfasst, wobei der Schmierstoffauslass ein Rückschlagventil oder ein Druckbegrenzungsventil umfasst.

Sobald die notwendige Spannkraft über die Zufuhr des Schmiermittels eingestellt ist, kann überschüssiger Schmierstoff aus dem Zylinderraum austreten. Durch das Rückschlagventil oder Druckbegrenzungsventil das in dem Schmierstoffauslass der Kolben-Zylinder-Einheit vorgesehen ist, kann ein Druckniveau definiert werden, bei dessen Überschreiten der Schmierstoff aus der Kolben-Zylinder-Einheit austritt, wodurch dem Bediener signalisiert wird, dass die notwendige Spannkraft eingestellt wurde.

Auch wenn diese Ausgestaltung der Kolben-Zylinder-Einheit vorrangig bei der Verwendung einer Fettpresse zum Zuführen von Schmierstoff in die Kolben-Zylinder-Einheit von Vorteil ist, ist es gleichermaßen vorstellbar, dass ein solches Schmierstoffauslassventil bei einer Versorgung der Kolben-Zylinder-Einheit mit Schmierstoff über ein zentrales Schmiersystem der landwirtschaftlichen Ballenpresse Verwendung findet.

Vorzugsweise ist das Rückschlagventil des Schmierstoffauslasses als steuerbares Rückschlagventil oder das Druckbegrenzungsventil des Schmierstoffauslasses als einstellbares Druckbegrenzungsventil ausgebildet.

Auch hier erlaubt die Verwendung eines steuerbaren Rückschlagventils oder einstellbaren Druckbegrenzungsventils, den notwendigen Druck zum Betätigen des Rückschlagventils oder Druckbegrenzungsventils in Abhängigkeit der aufzubringenden Spannkraft variabel einzustellen.

Insbesondere ist der Schmierstoffauslass der Kolben-Zylinder-Einheit mit mindestens einer Schmierstelle an der Spanneinrichtung, insbesondere einem Lagerpunkt des Spannmittels und/oder mindestens einem Lagerpunkt des zusätzlichen Hebels, strömungstechnisch verbunden.

Sofern der überschüssige Schmierstoff, der aus dem Schmierstoffauslassventil der Kolben-Zylinder-Einheit austritt, nicht ohne Verwendung verloren gehen soll, kann dieser über eine strömungstechnische Verbindung des Schmierstoffauslasses der Kolben-Zylinder-Einheit mit zumindest einer Schmierstelle der Spanneinrichtung vorteilhafter Weise dazu genutzt werden, diese Schmierstellen zu schmieren.

Gemäß einer vorteilhaften Weiterbildung der Erfindung ist vorgesehen, dass die landwirtschaftliche Ballenpresse eine Steuereinrichtung umfasst, die dazu eingerichtet ist, wahlweise das Ventil im Schmierstoffeinlass der Kolben-Zylinder-Einheit, das Ventil im Schmierstoffauslass der Kolben-Zylinder-Einheit, das Ventil in der von der Schmierstoffverteilleitung abzweigenden Zweigleitung und/oder den Schmierstoffbehälter, die Schmierstoffpumpe und/oder die Schmierstoffverteilereinheit des zentralen Schmiersystems entsprechend einer vorabfestlegbaren oder vorabfestgelegten Vorgabe anzusteuern.

Die Nutzung einer Steuereinrichtung, die dazu eingerichtet ist, wahlweise die etwaig vorhandenen Ventile gemäß einer vorabfestlegbaren oder vorabfestgelegten Vorgabe anzusteuern, ist dahingehend als vorteilhaft anzusehen, dass eine hochpräzise Einstellung der Spannkraft der Spanneinrichtung möglich ist bei einer gleichzeitig äußerst zuverlässigen Versorgung von Schmierstellen der Spanneinrichtung und/oder der landwirtschaftlichen Ballenpresse. Die Vorgaben, die die Steuereinrichtung zur Ansteuerung der Ventile und/oder Komponenten des zentralen Schmiersystems nutzt, können entweder von einem Bediener vorab festgelegt werden oder in einer mit der Steuereinrichtung verbundenen Speichereinheit hinterlegt sein, auf die die Steuereinrichtung dann selbsttätig zugreifen kann.

Gemäß einer vorteilhaften Weiterbildung der Erfindung ist vorgesehen, dass das Spannglied eine Spannfeder umfasst, die zwischen einem Zylinder und dem Kolben der Kolben-Zylinder-Einheit angeordnet ist.

Die Verwendung einer zusätzlichen Spannfeder als Teil des Spannglieds stellt sicher, dass etwaige Verluste der Spannkraft im Zugmittel aufgrund von Längungseffekten während der Lebensdauer des Zugmitteltriebs bzw. während des Betriebs der landwirtschaftlichen Ballenpresse an die Spanneinrichtung rückübermittelt werden, was eine Nachstellung der Spannkraft über das Zuführen von Schmierstoff in die Kolben-Zylinder-Einheit signalisiert bzw. auslöst.

Gemäß einer vorteilhaften Weiterbildung der Erfindung ist vorgesehen, dass die landwirtschaftliche Ballenpresse eine Vielzahl an Zugmitteltrieben mit jeweils mindestens einer Spanneinrichtung umfasst.

Gemäß einer vorteilhaften Weiterbildung der Erfindung ist vorgesehen, dass der mindestens eine Zugmitteltrieb ein Riementrieb und das Spannmittel der Spanneinrichtung eine Riemenspannrolle ist.

Gemäß einer vorteilhaften Weiterbildung der Erfindung ist vorgesehen, dass der mindestens eine Zugmitteltrieb ein Kettentrieb und das Spannmittel der Spanneinrichtung ein Kettenspannrad ist.

Je nach Ausgestaltung der landwirtschaftlichen Ballenpresse können demnach notwendige Zugmitteltriebe verbaut werden, die die für den Antrieb des entsprechenden Arbeitsaggregats bzw. der Funktionseinheit der landwirtschaftlichen Ballenpresse notwendige Antriebskraft übermitteln können. In diesem Zusammenhang ist es vorstellbar, dass alle Zugmitteltriebe der landwirtschaftlichen Ballenpresse als Riementriebe oder aber als Kettentriebe ausgebildet sind. Genauso gut ist es jedoch auch möglich, dass einige der Zugmitteltriebe der landwirtschaftlichen Ballenpresse als Riementriebe und andere als Kettentriebe ausgebildet sind.

Die erfindungsgemäße Aufgabe wird ferner durch eine Kombination aus einer landwirtschaftlichen Arbeitsmaschine, insbesondere einem Traktor, und einer von dieser gezogenen landwirtschaftlichen Ballenpresse gemäß dem unabhängigen Patentanspruch 13 gelöst.

Die vorliegende Erfindung wird nachstehend anhand der in den Figuren abgebildeten Ausführungsformen näher beschrieben.

Es zeigen:
- FIG. 1: eine schematische und exemplarische Darstellung einer erfindungsgemäßen Kombination aus einer als Traktor ausgebildeten landwirtschaftlichen Arbeitsmaschine und einer von dieser gezogenen landwirtschaftlichen Ballenpresse;
- FIG. 2: eine schematische und exemplarische Darstellung der erfindungsgemäßen landwirtschaftlichen Ballenpresse ohne Fahrwerk und Verkleidung;
- FIG. 3: eine schematische und exemplarische Darstellung einer erfindungsgemäßen Spanneinrichtung;
- FIG. 4: einen schematischen und exemplarischen Schaltplan zum Zuführen von Schmierstoff in eine Kolben-Zylinder-Einheit der erfindungsgemäßen Spanneinrichtung mittels eines zentralen Schmiersystems der erfindungsgemäßen landwirtschaftlichen Ballenpresse; und
- FIG. 5: einen schematischen und exemplarischen Schaltplan zum Zuführen von Schmierstoff in die Kolben-Zylinder-Einheit der erfindungsgemäßen Spanneinrichtung mittels einer Fettpresse.

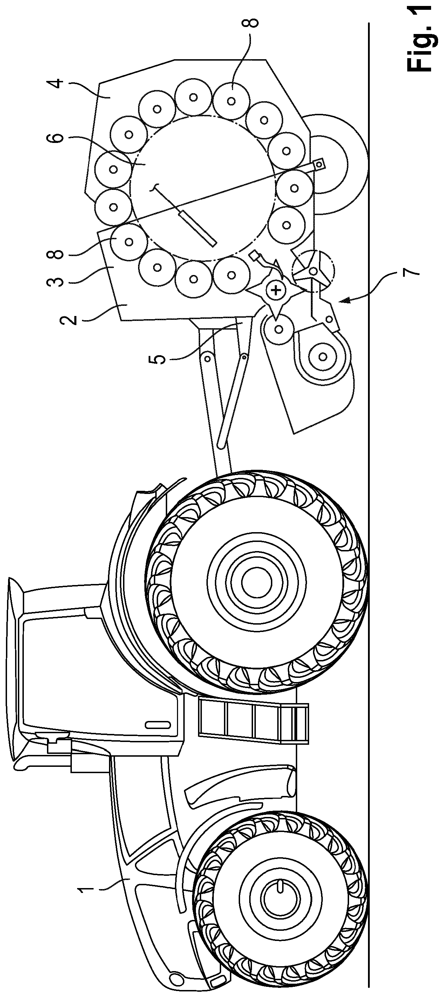

FIG. 1 zeigt eine schematische und exemplarische Darstellung einer erfindungsgemäßen Kombination aus einer landwirtschaftlichen Arbeitsmaschine 1 und einer von dieser gezogenen landwirtschaftlichen Ballenpresse 2. Die landwirtschaftliche Arbeitsmaschine 1 ist in der in FIG. 1 abgebildeten Darstellung als Traktor ausgebildet, andere landwirtschaftliche Arbeitsmaschinen 1, die dazu eingerichtet sind, eine landwirtschaftliche Ballenpresse 2 zu ziehen bzw. zu schleppen sind jedoch gleichermaßen im Rahmen der vorliegenden Erfindung vorstellbar. Die landwirtschaftliche Ballenpresse 2 ist in der in FIG. 1 abgebildeten Darstellung als Rundballenpresse ausgebildet. Die Rundballenpresse weist ein Pressengehäuse auf, das aus einem feststehenden Gehäuseteil 3 und einer an dem feststehenden Gehäuseteil 3 schwenkbar gelagerten Auswurfklappe 4 besteht bzw. diese aufweist. Die Auswurfklappe 4 ist derart schwenkbar an dem feststehenden Gehäuseteil 3 des Pressengehäuses gelagert, dass diese zwischen einer Schließstellung und einer Öffnungsstellung verlagerbar ist. Das Pressengehäuse, insbesondere der feststehende Gehäuseteil 3, ist in aller Regel auf einem Fahrgestell 5 angeordnet und mit diesem verbunden, über das die Rundballenpresse wiederum mit der landwirtschaftlichen Arbeitsmaschine 1 gekoppelt wird.

Das Pressengehäuse, insbesondere die beiden Gehäuseteile 3, 4, begrenzt eine Presskammer 6, in die mithilfe von Mitteln 7 zum Aufnehmen und Fördern von Erntegut das Erntegut gefördert wird. Die Mittel 7 umfassen zumindest eine sogenannte Pick-Up, einen Schneidrotor und einen Raffer. Auf die Beschreibung dieser Mittel 7 wird an dieser Stelle verzichtet, da diese hinlänglich bekannt sind.

Sowohl das feststehende Gehäuseteil 3 als auch die Auswurfklappe 4 weisen eine Vielzahl von Presswalzen 8 auf, die beabstandet voneinander an beiden Gehäuseteilen 3, 4 verteilt und die Presskammer 6 umfangsseitig begrenzend angeordnet sind. Jede der Presswalzen 8 wird angetrieben, wodurch das in die Presskammer 6 geförderte Erntegut zu einem Rundballen geformt bzw. gepresst wird. Die Rundballenpresse weist ferner eine - in den FIGs. nicht dargestellte - Einrichtung zum Ummanteln von in der Presskammer 6 gepressten Rundballen mit einer Hülle auf, die als Folie, Netz oder dergleichen ausgebildet sein kann.

Auch wenn die in den FIGs. abgebildete landwirtschaftliche Ballenpresse 2 als Rundballenpresse mit Presswalzen 8 ausgebildet ist, ist die Erfindung gleichermaßen auf Rundballenpressen mit einer variablen Presskammer und Quaderballenpressen übertragbar.

Erfindungsgemäß ist nun vorgesehen, dass die landwirtschaftliche Ballenpresse 2 mindestens einen Zugmitteltrieb 9 zum Antreiben von Arbeitsaggregaten der landwirtschaftlichen Ballenpresse 2 umfasst. Als Arbeitsaggregate der landwirtschaftlichen Ballenpresse 2 sind im Rahmen dieser Erfindung sämtliche angetriebene Funktionseinheiten der landwirtschaftlichen Ballenpresse 2 anzusehen, wie beispielsweise Presswalzen 8, Mittel 7 zum Aufnehmen und Fördern von Erntegut, eine Einrichtung zum Ummanteln, eine Auswurfklappe 4 oder dergleichen.

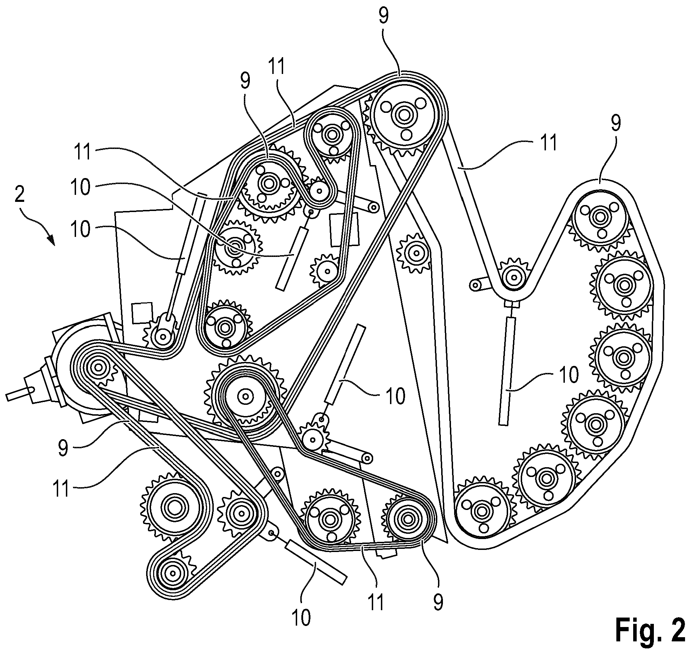

Die in FIGs. 2 abgebildete Darstellung zeigt schematisch und exemplarisch eine solche erfindungsgemäße landwirtschaftliche Ballenpresse 2 mit mindestens einem Zugmitteltrieb 9 zum Antreiben von Arbeitsaggregaten der landwirtschaftlichen Ballenpresse 2. In der in FIGs. 2 abgebildeten Darstellung ist nicht nur ein solcher Zugmitteltrieb 9 dargestellt, sondern vielmehr eine Vielzahl solcher Zugmitteltriebe 9, die jeweils ein oder mehrere Arbeitsaggregate der landwirtschaftlichen Ballenpresse 2 antreiben. Ein Zugmitteltrieb 9 kann wahlweise als Riementrieb oder als Kettentrieb ausgebildet sein. Bei einer Vielzahl an Zugmitteltrieben 9 ist es möglich, dass einige der Zugmitteltriebe 9 der Vielzahl an Zugmitteltrieben 9 als Riementriebe und andere Zugmitteltriebe 9 der Vielzahl an Zugmitteltrieben 9 als Kettentriebe ausgebildet sind. Auch ist es möglich, dass alle Zugmitteltriebe 9 der Vielzahl an Zugmitteltrieben 9 als Riementriebe oder aber alle Zugmitteltriebe 9 der Vielzahl an Zugmitteltrieben 9 als Kettentriebe ausgebildet sind. Jeder Zugmitteltrieb 9 umfasst zumindest ein Antriebsrad, um dem Zugmitteltrieb 9 Antriebskraft zuzuführen, und mindestens ein Abtriebsrad, um die Antriebskraft an ein Arbeitsaggregat abzugeben. Das Antriebsrad eines Zugmitteltriebs 9 kann mit einem Abtriebsrad eines anderen Zugmitteltriebs 9 zusammenwirken.

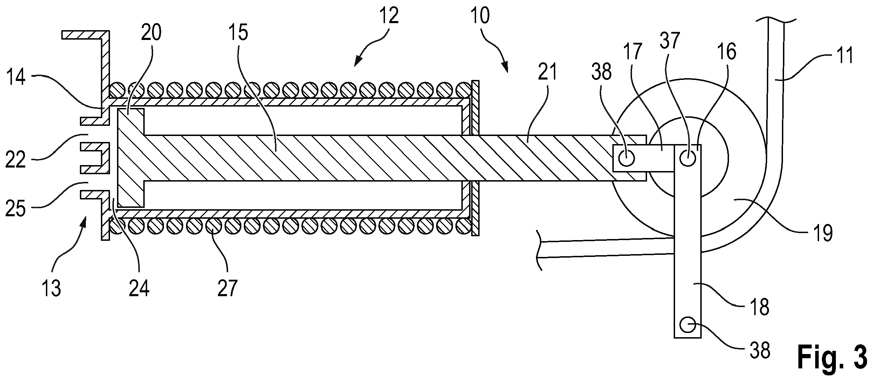

Jedem dieser Zugmitteltriebe 9 ist mindestens eine Spanneinrichtung 10 zugeordnet, die an der landwirtschaftlichen Ballenpresse 2, insbesondere einer tragenden Rahmenstruktur der landwirtschaftlichen Ballenpresse 2, beispielsweise einer tragenden Rahmenstruktur des feststehenden Gehäuseteil 3 und/oder der Auswurfklappe 4, angeordnet bzw. befestigt ist. Mittels der Spanneinrichtung 10 wird ein Zugmittel 11 des Zugmitteltriebs 9 mit einer Spannkraft beaufschlagt, so dass die erforderliche Antriebskraft von dem Zugmitteltrieb 9 auf die anzutreibenden Arbeitsaggregate der landwirtschaftlichen Ballenpresse 2 übertragen wird. Damit die von der Spanneinrichtung 10 auf das Zugmittel 11 aufgebrachte Spannkraft einstellbar ist, umfasst die Spanneinrichtung 10 ein Spannglied 12, dessen erfindungsgemäße Ausgestaltung und Funktionsweise im Folgenden unter Bezugnahme auf die FIGs. 3 bis 5 im Detail erläutert wird.

Wesentlich für die erfindungsgemäße Spanneinrichtung 10, die schematisch und exemplarisch in FIG. 3 im Detail dargestellt ist, ist, dass das Spannglied 12 eine Kolben-Zylinder-Einheit 13 umfasst, der zum Einstellen einer auf das Zugmittel 11 des Zugmitteltriebs 9 ausgeübten Spannkraft ein Schmierstoff zuführbar ist.

Die Kolben-Zylinder-Einheit 13 umfasst dabei einen Zylinder 14 und einen in dem Zylinder 14 beweglich angeordneten Kolben 15. Der Kolben 15 ist direkt oder aber über einen zusätzlichen Hebel 16, vorzugsweise einen zwei Hebelarme 17, 18 umfassenden Hebel 16, indirekt mit einem Spannmittel 19 der Spanneinrichtung 10 verbunden, über das die Spannkraft auf das Zugmittel 11 des Zugmitteltrieb 9 aufgebracht wird. Die Spanneinrichtung 10 kann über den Zylinder 14 an der landwirtschaftlichen Ballenpresse 2 angeordnet bzw. befestigt werden. Der Kolben 15 umfasst einen Kolbenkopf 20 und eine sich an den Kolbenkopf 20 anschließende Kolbenstange 21. Je nach Ausgestaltung des Zugmitteltriebs 9 entweder als Riementrieb oder aber als Kettentrieb ist das Spannmittel 19 entsprechend als Riemenspannrad oder aber als Kettenspannrad ausgebildet. Wie bereits angedeutet, erfolgt das Aufbringen der Spannkraft bzw. das Einstellen derselben derart, dass der Kolben-Zylinder-Einheit 13 ein Schmierstoff zugeführt wird. Der Schmierstoff, der auch zur Schmierung von Schmierstellen der landwirtschaftlichen Ballenpresse 2 verwendet werden kann, ist vorzugsweise ein Schmierfett.

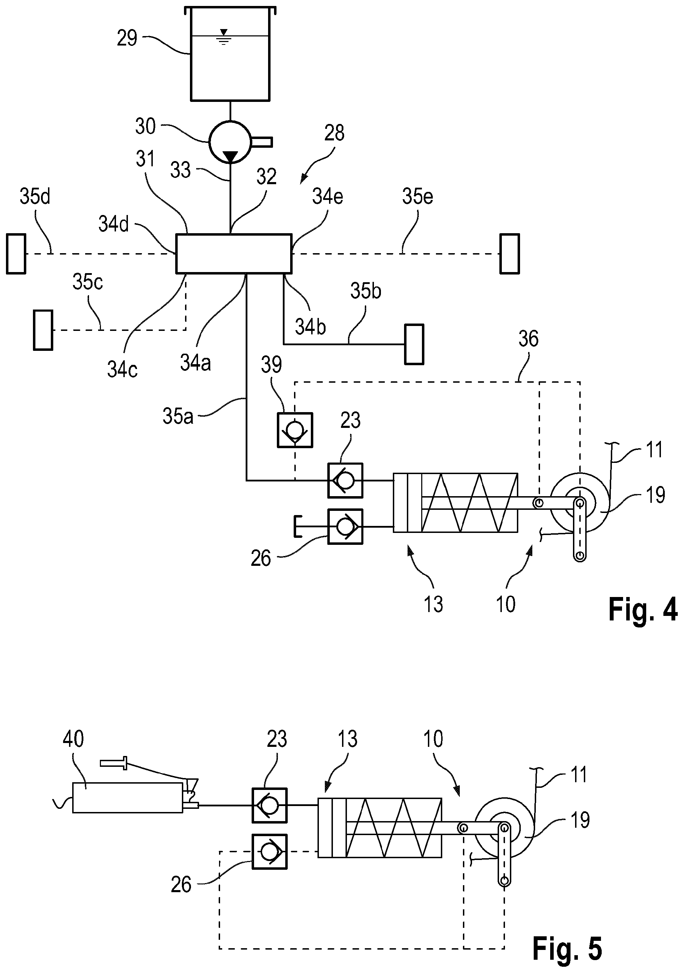

Damit der Kolben-Zylinder-Einheit 13 der Schmierstoff zum Einstellen der mittels der Spanneinrichtung 10 auf das Zugmittel 11 des Zugmitteltrieb 9 ausgeübten Spannkraft zugeführt werden kann, umfasst die Kolben-Zylinder-Einheit 13 einen Schmierstoffeinlass 22, der an dem Zylinder 14 der Kolben-Zylinder-Einheit 13 ausgebildet ist. Der Schmierstoffeinlass 22 umfasst eine Rückschlagventil 23, das in den FIGs. 4 und 5 dargestellt ist, so dass der Schmierstoff in den Zylinder 14 in einen Zylinderraum 24, der durch eine Innenwandung des Zylinders 14 und eine Stirnfläche des Kolbens 15 gebildet wird, einströmen kann, ein Ausströmen des Schmierstoffs aus dem Zylinderraum 24 hingegen verhindert wird. Gemäß einer Ausführungsform kann das Rückschlagventil 23 im Schmierstoffeinlass 22 steuerbar ausgebildet sein, so dass ein Öffnungsdruck für das Rückschlagventil 23 flexibel einstellbar ist.

Die Kolben-Zylinder-Einheit 13 kann weiterhin einen Schmierstoffauslass 25 umfassen, der ebenfalls an dem Zylinder 14 der Kolben-Zylinder-Einheit 13 ausgebildet ist. Der Schmierstoffauslass 25 umfasst wahlweise eine Rückschlagventil 26 oder ein Druckbegrenzungsventil 26, das in FIG. 5 dargestellt ist, so dass ein Teil des dem Zylinder 14 zugeführten Schmierstoffs zur Einstellung der Spannkraft bei einem Überschreiten eines vorabfestlegbaren oder vorabfestgelegten Druckwerts aus dem Zylinderraum 24 ausströmen kann. Gemäß einer Ausführungsform kann das Rückschlagventil 26 oder das Druckbegrenzungsventil 26 im Schmierstoffauslass 25 steuerbar bzw. einstellbar ausgebildet sein, so dass ein Öffnungsdruck für das Rückschlagventil 26 bzw. Druckbegrenzungsventil 26 flexibel einstellbar ist. Der Schmierstoffauslass 25 kann ferner mit einem in den FIGs. nicht dargestellten Verschluss verschlossen werden.

Das Spannglied 12 der Spanneinrichtung 10 kann weiterhin eine Spannfeder 27 umfassen, die zwischen dem Zylinder 14 und dem Kolben 15 der Kolben-Zylinder-Einheit 13 angeordnet ist. Die Spannfeder 27 ist vorzugsweise derart angeordnet, dass sie sich mit einem Ende an einem Teil des Zylinders 14 abstützt und mit ihrem gegenüberliegenden anderen Ende mit dem Kolben 15 verbunden ist. Indem der Kolben-Zylinder-Einheit 13 der Schmierstoff zugeführt wird und sich somit der Kolben 15 im Zylinder 14 bewegt, wird die Spannfeder 27 vorgespannt, wobei die Spannkraft über die direkte oder indirekte Kopplung des Kolbens 15 mit dem Spannmittel 19 auf das Zugmittel 11 des Zugmitteltriebs 9 aufgebracht.

Die Versorgung der Kolben-Zylinder-Einheit 13 mit Schmierstoff zum Einstellen der auf das Zugmittel 11 ausgeübten Spannkraft kann auf verschiedene Arten erfolgen. Gemäß einer Ausführungsform, die in FIG. 4 abgebildet ist, umfasst die landwirtschaftliche Ballenpresse 2 ein sogenanntes zentrales Schmiersystem 28, welches vorrangig der Versorgung von Schmierstellen der landwirtschaftlichen Ballenpresse 2 mit Schmierstoff, insbesondere Schmierfett, dient. Dieses zentrale Schmiersystem 28 dient nunmehr ebenfalls dazu, die Kolben-Zylinder-Einheit 13 mit Schmierstoff zum Einstellen der auf das Zugmittel 11 ausgeübten Spannkraft zu versorgen. Hierzu ist das zentrale Schmiersystem 28 mit dem Schmierstoffeinlass 22 der Kolben-Zylinder-Einheit 13 zum Zuführen des Schmierstoffs strömungstechnisch verbunden.

Das zentrale Schmiersystem 28 umfasst zumindest einen Schmierstoffbehälter 29, eine Schmierstoffpumpe 30 und eine Schmierstoffverteilereinheit 31. Die Schmierstoffpumpe 30 ist strömungstechnisch sowohl mit dem Schmierstoffbehälter 29 als auch mit der Schmierstoffverteilereinheit 31 verbunden und fördert den Schmierstoff, insbesondere das Schmierfett, aus dem Schmierstoffbehälter 29 zu der Schmierstoffverteilereinheit 31. Die Schmierstoffverteilereinheit 31 umfasst hierfür einen Schmierstoffeinlass 32, der mittels einer Schmierstoffhauptleitung 33 mit der Schmierstoffpumpe 30 strömungstechnisch verbunden ist. Die Schmierstoffverteilereinheit 31 umfasst weiterhin mindestens zwei Schmierstoffauslässe 34a-34n. Ein Schmierstoffauslass 34a der mindestens zwei Schmierstoffauslese 34a-n ist über eine Schmierstoffverteilleitung 35a mit dem Schmierstoffeinlass 22 der Kolben-Zylinder-Einheit 13 strömungstechnisch verbunden. Zumindest ein weiterer Schmierstoffauslass 34b der mindestens zwei Schmierstoffauslässe 34a-n der Schmierstoffverteilereinheit 31 ist mittels einer weiteren Schmierstoffverteilleitung 35b mit einer Schmierstelle der landwirtschaftlichen Ballenpresse 2 strömungstechnisch verbunden. Die Schmierstoffverteilereinheit 31 kann nicht nur einen weiteren Schmierstoffauslass 34b umfassen, sondern vielmehr eine Vielzahl von weiteren Schmierstoffausläsen 34b-n, die jeweils mit einer weiteren Schmierstoffverteilleitung 35b-n mit einer sprechenden Schmierstelle der landwirtschaftlichen Ballenpresse 2 strömungstechnisch verbunden sind. Die weiteren Schmierstoffverteilleitungen 35b-n können auch mit weiteren - in den FIGs. nicht dargestellten - Schmierstoffverteilereinheiten strömungstechnisch verbunden sein, von denen dann wiederum eine Vielzahl von Schmierstoffverteilleitungen abgeht, die zu Schmierstellen der landwirtschaftlichen Ballenpresse 2 führen.

Das für die Schmierung der Schmierstellen der landwirtschaftlichen Ballenpresse 2 verwendete zentrale Schmiersystem 28 kann demnach auch dazu verwendet werden, die Spannkraft der Spanneinrichtung 10 einzustellen. Hierzu wird über das zentrale Schmiersystem 28 der Kolben-Zylinder-Einheit 13 das Schmiermittel, insbesondere das Schmierfett, zugeführt und zwar mit einem Druck, so dass eine gewünschte bzw. notwendige Spannkraft auf das Zugmittel 11 des Zugmitteltrieb 9 aufgebracht werden kann. Ein Bediener muss somit die Spanneinrichtung 10 nicht manuell einstellen. Vielmehr erfolgt die Einstellung der Spannkraft der Spanneinrichtung 10 automatisch und zwar sobald die landwirtschaftliche Ballenpresse 2 in Betrieb genommen wird.

Gemäß einer vorteilhaften Weiterbildung dieser Ausführungsform kann es vorgesehen sein, dass die den Schmierstoffauslass 34a der Schmierstoffverteilereinheit 31 mit dem Schmierstoffeinlass 22 der Kolben-Zylinder-Einheit 13 verbindende Schmierstoffverteilleitung 35a eine Zweigleitung 36 umfasst, die sich, vorzugsweise unmittelbar, vor dem Schmierstoffeinlass 22 der Kolben-Zylinder-Einheit 13 von der Schmierstoffverteilleitung 35a abzweigt. Die Zweigleitung 36 ist strömungstechnisch mit mindestens einer Schmierstelle an der Spanneinrichtung verbunden. Vorzugsweise ist die Zweigleitung 36 mit einem Lagerpunkt 37 des Spannmittels 19 und/oder mindestens einem Lagerpunkt 38 des zusätzlichen Hebels 16, sofern ein solcher verwendet wird, strömungstechnisch verbunden. Weiterhin umfasst die Zweigleitung 36 vorzugsweise eine Rückschlagventil 39 oder ein Druckbegrenzungsventil 39. Auch dieses Rückschlagventil 39 oder Druckbegrenzungsventil 39 kann vorzugsweise ein steuerbares bzw. einstellbares Ventil sein.

Sofern der Druck in der Schmierstoffverteilleitung 35a demnach den notwendigen Druck zum Aufbringen der Spannkraft übersteigt schaltet sich das Rückschlagventil 39 oder das Druckbegrenzungsventil 39 frei, so dass über die Zweigleitung 36 die Schmierstellen der Spanneinrichtung 10 mit Schmiermittel, insbesondere Schmierfett, versorgt werden können. Der Schmierstoffauslass 25 ist bei einer solchen Ausgestaltung vorzugsweise mit dem Verschluss verschlossen, so dass über diesen kein Schmierstoff aus dem Zylinderraum 24 der Kolben-Zylinder-Einheit 13 entweichen kann, sondern lediglich über die Zweigleitung 36 an die Schmierstellen der Spanneinrichtung 10. Alternativ hierzu kann ein Druck, der zum Freischalten des Rückschlagventil 26 oder des Druckbegrenzungsventil 26 festgelegt ist, derart höher als der Druck, der zum Freischalten des Rückschlagventil 39 oder Druckbegrenzungsventil 39 notwendig ist, gewählt werden, so dass bei Erreichen des notwendigen Drucks zum Einstellen der Spannkraft der Schmierstoff stets über die Zweigleitung 36 den Schmierstellen der Spanneinrichtung 10 zugeführt wird.

Gemäß einer weiteren Ausführungsform, die in FIG. 5 abgebildet ist, ist der Schmierstoffeinlass 22 der Kolben-Zylinder-Einheit 13 zum Zuführen des Schmierstoffs, insbesondere Schmierfetts, als Schmiernippel ausgebildet. Anders als in der zuvor beschriebenen Ausführungsform wird der Schmierstoff, insbesondere das Schmierfett, demnach nicht über ein zentrales Schmiersystem 28 der Kolben-Zylinder-Einheit 13 zugeführt, sondern vielmehr über eine an den Schmiernippel angesetzte Fettpresse 40 in den Zylinderraum 24 der Kolben-Zylinder-Einheit 13 eingebracht, wodurch die Spanneinrichtung 10 die Spannkraft auf das Zugmittel 11 des Zugmitteltrieb 9 aufbringt.

Bei einer derartigen Ausgestaltung ist der Schmierstoffauslass 25 der Kolben-Zylinder-Einheit 13 vorzugsweise nicht mit einem Verschluss verschlossen, so dass beim Erreichen des notwendigen Druckes zur Einstellung der Spannkraft überschüssiger Schmierstoff über den mit dem Rückschlagventil 26 oder Druckbegrenzungsventil 26 ausgestattete Schmierstoffauslass 25 der Kolben-Zylinder-Einheit 13 entweichen kann. Wahlweise kann der Schmierstoffauslass 25 mit mindestens einer Schmierstelle an der Spanneinrichtung 10, insbesondere dem Lagerpunkt des Spannmittels 19 und/oder mindestens einem Lagerpunkt des zusätzlichen Hebels 16, strömungstechnisch verbunden sein, so dass der überschüssige Schmierstoff zur Schmierung dieser Stellen genutzt werden kann.

Es ist weiterhin möglich bei der zuvor beschriebenen und in FIG. 4 dargestellten Ausführungsform mit einem zentralen Schmiersystem 28, auch eine optionale manuelle Versorgung über eine Fettpresse zu realisieren. Hierzu kann an der der Schmierstoffverteilleitung 35a ein - in den FIGs. nicht dargestellter - zusätzlicher Einlass oder eine - in den FIGs. nicht dargestellte - zusätzliche Zweigleitung, vorzugsweise mit einem Rückschlagventil oder Druckbegrenzungsventil, vorgesehen sein, an die die Fettpresse angeschlossen werden kann, um Schmierstoff zum Einstellen der Spannkraft dem Zylinderraum 24 zuzuführen.

Die landwirtschaftliche Ballenpresse 2 umfasst vorzugsweise weiterhin eine - in den FIGs. nicht dargestellte - Steuereinrichtung. Diese ist dazu eingerichtet, wahlweise das Ventil 23 im Schmierstoffeinlass 22 der Kolben-Zylinder-Einheit 13, das Ventil 26 im Schmierstoffauslass 25 der Kolben-Zylinder-Einheit 13, das Ventil 39 in der von der Schmierstoffverteilleitung 35a abzweigenden Zweigleitung 36 und oder den Schmierstoffbehälter 29, die Schmierstoffpumpe 30 und/oder die Schmierstoffverteilereinheit 31 des zentralen Schmiersystems 28 entsprechend einer vorabfestlegbaren oder vorabfestgelegten Vorgabe anzusteuern. Die Vorgaben können über eine an der landwirtschaftlichen Ballenpresse 2 oder der landwirtschaftlichen Arbeitsmaschine 1, die die landwirtschaftliche Ballenpresse 2 zieht bzw. schleppt, ausgebildete - in den FIGs. nicht dargestellte - Bedieneinrichtung, die mit der Steuereinrichtung zur Übertragung von Daten verbunden ist, von dem Bediener festgelegt werden und/oder in einer mit der Steuereinrichtung zur Übertragung von Daten verbundenen Speichereinheit hinterlegt sein. Sofern die Ventile 23, 26, 39 nicht als einstellbare bzw. ansteuerbare Ventile ausgebildet sind, sind sie nichtsdestotrotz vor Inbetriebnahme der landwirtschaftlichen Ballenpresse 2 derart voreingestellt, dass die notwendige Spannkraft über eine Versorgung mit Schmierstoff, insbesondere Schmierfett, entsprechend der zuvor beschriebenen Ausführungsformen einstellbar ist.

### Bezugszeichenliste

| | | | |
|---|---|---|---|
| 1 | landwirtschaftliche Arbeitsmaschine | 26 | Rückschlagventil/Druckbegrenzungsventil |
| 2 | landwirtschaftliche Ballenpresse | 27 | Spannfeder |
| 3 | feststehendes Gehäuseteil | 28 | zentrales Schmiersystem |
| 4 | Auswurfklappe | 29 | Schmierstoffbehälter |
| 5 | Fahrgestell | 30 | Schmierstoffpumpe |
| 6 | Presskammer | 31 | Schmierstoffverteilereinheit |
| 7 | Mittel zum Aufnehmen und Fördern von Erntegut | 32 | Schmierstoffeinlass |
| 8 | Presswalze | 33 | Schmierstoffhauptleitung |
| 9 | Zugmitteltrieb | 34a-n | Schmierstoffauslass |
| 10 | Spanneinrichtung | 35a-n | Schmierstoffverteilleitung |
| 11 | Zugmittel | 36 | Zweigleitung |
| 12 | Spannglied | 37 | Lagerpunkt |
| 13 | Kolben-Zylinder-Einheit | 38 | Lagerpunkt |
| 14 | Zylinder | 39 | Rückschlagventil/Druckbegrenzungsventil |
| 15 | Kolben | 40 | Fettpresse |
| 16 | Hebel | | |
| 17 | Hebelarm | | |
| 18 | Hebelarm | | |
| 19 | Spannmittel | | |
| 20 | Kolbenkopf | | |
| 21 | Kolbenstange | | |
| 22 | Schmierstoffeinlass | | |
| 23 | Rückschlagventil/Druckbegrenzungsventil | | |
| 24 | Zylinderraum | | |
| 25 | Schmierstoffauslass | | |

## Patentansprüche

1. Landwirtschaftliche Ballenpresse (2) mit mindestens einem Zugmitteltrieb (9) zum Antreiben von Arbeitsaggregaten der landwirtschaftlichen Ballenpresse (2), wobei dem Zugmitteltrieb (9) mindestens eine Spanneinrichtung (10) zugeordnet ist, wobei die mindestens eine Spanneinrichtung (10) ein Spannglied (12) zum Einstellen einer mittels der Spanneinrichtung (10) auf ein Zugmittel (11) des mindestens einen Zugmitteltriebs (9) ausgeübten Spannkraft umfasst,
wobei das Spannglied (12) eine Kolben-Zylinder-Einheit (13) umfasst, wobei ein Kolben (15) der Kolben-Zylinder-Einheit (13) direkt oder über einen zusätzlichen Hebel (16) indirekt mit einem Spannmittel (19) der Spanneinrichtung (10) verbunden ist, über das die Spannkraft auf das Zugmittel (11) des mindestens einen Zugmitteltriebs (9) aufgebracht wird, wobei der Kolben-Zylinder-Einheit (13) zum Einstellen der auf das Zugmittel (11) ausgeübten Spannkraft ein Schmierstoff, vorzugsweise ein Schmierfett, zuführbar ist, wobei die Kolben-Zylinder-Einheit (13) einen Schmierstoffeinlass (22) zum Zuführen des Schmierstoffs umfasst, wobei der Schmierstoffeinlass (22) ein, vorzugsweise steuerbares, Rückschlagventil (23) umfasst, **dadurch gekennzeichnet, dass** die landwirtschaftliche Ballenpresse (2) ein zentrales Schmiersystem (28) umfasst, welches mit dem Schmierstoffeinlass (22) der Kolben-Zylinder-Einheit (13) zum Zuführen des Schmierstoffs strömungstechnisch verbunden ist.

2. Landwirtschaftliche Ballenpresse (2) nach Anspruch 1, **dadurch gekennzeichnet, dass** das zentrale Schmiersystem (28) zumindest einen Schmierstoffbehälter (29), eine Schmierstoffpumpe (30) und eine Schmierstoffverteilereinheit (31) umfasst, wobei die Schmierstoffpumpe (30) strömungstechnisch sowohl mit dem Schmierstoffbehälter (29) als auch mit der Schmierstoffverteilereinheit (31) verbunden ist, wobei die Schmierstoffverteilereinheit (31) einen Schmierstoffeinlass (32), der mittels einer Schmierstoffhauptleitung (33) mit der Schmierstoffpumpe (30) strömungstechnisch verbunden ist, und mindestens zwei Schmierstoffauslässe (34a-n) umfasst, wobei ein Schmierstoffauslass (34a) der mindestens zwei Schmierstoffauslässe (34a-n) über eine Schmierstoffverteilleitung (35a) mit dem Schmierstoffeinlass (22) der Kolben-Zylinder-Einheit (13) strömungstechnisch verbunden ist.

3. Landwirtschaftliche Ballenpresse (2) nach Anspruch 2, **dadurch gekennzeichnet, dass** die den Schmierstoffauslass (34a) der Schmierstoffverteilereinheit (31) mit dem Schmierstoffeinlass (22) der Kolben-Zylinder-Einheit (13) verbindende Schmierstoffverteilleitung (35a) eine Zweigleitung (36) umfasst, die sich, vorzugsweise unmittelbar, vor dem Schmierstoffeinlass (22) der Kolben-Zylinder-Einheit (13) von der Schmierstoffverteilleitung (35a) abzweigt, wobei die Zweigleitung (36) mit mindestens einer Schmierstelle an der Spanneinrichtung (10), insbesondere einem Lagerpunkt (37) des Spannmittels (19) und/oder mindestens einem Lagerpunkt (38) des zusätzlichen Hebels (16), strömungstechnisch verbunden ist, wobei, vorzugsweise, die Zweigleitung (36) ein, insbesondere steuerbares, Rückschlagventil (39) oder ein, insbesondere einstellbares, Druckbegrenzungsventil (39) umfasst.

4. Landwirtschaftliche Ballenpresse (2) nach einem der Ansprüche 2 oder 3, **dadurch gekennzeichnet, dass** zumindest ein weiterer Schmierstoffauslass (34b-n) der mindestens zwei Schmierstoffauslässe (34a-n) der Schmierstoffverteilereinheit (31) mittels einer weiteren Schmierstoffverteilleitung (35b-n) mit einer Schmierstelle der landwirtschaftlichen Ballenpresse (2) strömungstechnisch verbunden ist.

5. Landwirtschaftliche Ballenpresse (2) nach einem der Ansprüche 1 bis 4, **dadurch gekennzeichnet, dass** der Schmierstoffeinlass (22) der Kolben-Zylinder-Einheit (13) zum Zuführen des Schmierstoffs als Schmiernippel ausgebildet ist, wobei der Schmierstoff über den Schmiernippel mittels einer Fettpresse (40) der Kolben-Zylinder-Einheit (13) zuführbar ist.

6. Landwirtschaftliche Ballenpresse (2) nach einem der Ansprüche 1 bis 5, **dadurch gekennzeichnet, dass** die Kolben-Zylinder-Einheit (13) einen Schmierstoffauslass (25) zum Abführen zumindest eines Teils des Schmierstoffs aus der Kolben-Zylinder-Einheit (13) umfasst, wobei der Schmierstoffauslass (25) ein, vorzugsweise steuerbares, Rückschlagventil (26) oder ein, vorzugsweise einstellbares, Druckbegrenzungsventil (26) umfasst.

7. Landwirtschaftliche Ballenpresse (2) nach Anspruch 6, **dadurch gekennzeichnet, dass** der Schmierstoffauslass (25) der Kolben-Zylinder-Einheit (13) mit mindestens einer Schmierstelle an der Spanneinrichtung (10), insbesondere einem Lagerpunkt (37) des Spannmittels (19) und/oder mindestens einem Lagerpunkt (38) des zusätzlichen Hebels (16), strömungstechnisch verbunden ist.

8. Landwirtschaftliche Ballenpresse (2) nach einem der Ansprüche 1 bis 7, **dadurch gekennzeichnet, dass** die landwirtschaftliche Ballenpresse (2) eine Steuereinrichtung umfasst, die dazu eingerichtet ist, wahlweise das Ventil (23) im Schmierstoffeinlass (22) der Kolben-Zylinder-Einheit (13), das Ventil (26) im Schmierstoffauslass (25) der Kolben-Zylinder-Einheit (13), das Ventil (39) in der von der Schmierstoffverteilleitung (35a) abzweigenden Zweigleitung (36) und/oder den Schmierstoffbehälter (29), die Schmierstoffpumpe (30) und/oder die Schmierstoffverteilereinheit (31) des zentralen Schmiersystems (28) entsprechend einer vorabfestlegbaren oder vorabfestgelegten Vorgabe anzusteuern.

9. Landwirtschaftliche Ballenpresse (2) nach einem der Ansprüche 1 bis 8, **dadurch gekennzeichnet, dass** das Spannglied (12) eine Spannfeder (27) umfasst, die zwischen einem Zylinder (14) und dem Kolben (15) der Kolben-Zylinder-Einheit (13) angeordnet ist.

10. Landwirtschaftliche Ballenpresse (2) nach einem der Ansprüche 1 bis 9, **dadurch gekennzeichnet, dass** die landwirtschaftliche Ballenpresse (2) eine Vielzahl an Zugmitteltrieben (9) mit jeweils mindestens einer Spanneinrichtung (10) umfasst.

11. Landwirtschaftliche Ballenpresse (2) nach einem der Ansprüche 1 bis 10, **dadurch gekennzeichnet, dass** der mindestens eine Zugmitteltrieb (9) ein Riementrieb und das Spannmittel (19) der Spanneinrichtung (10) eine Riemenspannrolle ist.

12. Landwirtschaftliche Ballenpresse (2) nach einem der Ansprüche 1 bis 11, **dadurch gekennzeichnet, dass** der mindestens eine Zugmitteltrieb (9) ein Kettentrieb und das Spannmittel (19) der Spanneinrichtung (10) ein Kettenspannrad ist.

13. Kombination aus einer landwirtschaftlichen Arbeitsmaschine (1), insbesondere einem Traktor, und einer von dieser gezogenen landwirtschaftlichen Ballenpresse (2), **dadurch gekennzeichnet, dass** die landwirtschaftliche Ballenpresse (2) nach einem der Ansprüche 1 bis 12 ausgebildet ist.

## Claims

1. Agricultural baler (2) having at least one traction mechanism drive (9) for driving working units of the agricultural baler (2), wherein at least one tensioning device (10) is assigned to the traction mechanism drive (9), wherein the at least one tensioning device (10) comprises a tensioning member (12) for adjusting a tensioning force exerted by means of the tensioning device (10) on a traction mechanism (11) of the at least one traction mechanism drive (9),
wherein the tensioning member (12) comprises a piston-cylinder unit (13), wherein a piston (15) of the piston-cylinder unit (13) is connected directly or indirectly via an additional lever (16) to a tensioning means (19) of the tensioning device (10), via which tensioning means the tensioning force is applied to the traction mechanism (11) of the at least one traction mechanism drive (9), wherein a lubricant, preferably a lubricating grease, can be supplied to the piston-cylinder unit (13) for adjusting the tensioning force exerted on the traction mechanism (11), wherein the piston-cylinder unit (13) comprises a lubricant inlet (22) for supplying the lubricant, wherein the lubricant inlet (22) comprises a, preferably controllable, non-return valve (23), **characterized in that** the agricultural baler (2) comprises a central lubrication system (28) which is fluidically connected to the lubricant inlet (22) of the piston-cylinder unit (13) for supplying the lubricant.

2. Agricultural baler (2) according to Claim 1, **characterized in that** the central lubrication system (28) comprises at least one lubricant container (29), a lubricant pump (30) and a lubricant distributor unit (31), wherein the lubricant pump (30) is fluidically connected both to the lubricant container (29) and to the lubricant distributor unit (31), wherein the lubricant distributor unit (31) has a lubricant inlet (32), which is fluidically connected to the lubricant pump (30) by means of a lubricant main line (33), and at least two lubricant outlets (34a-n), wherein one lubricant outlet (34a) of the at least two lubricant outlets (34a-n) is fluidically connected to the lubricant inlet (22) of the piston-cylinder unit (13) via a lubricant distribution line (35a).

3. Agricultural baler (2) according to Claim 2, **characterized in that** the lubricant distribution line (35a) connecting the lubricant outlet (34a) of the lubricant distributor unit (31) to the lubricant inlet (22) of the piston-cylinder unit (13) comprises a branch line (36) which branches off from the lubricant distribution line (35a), preferably directly, upstream of the lubricant inlet (22) of the piston-cylinder unit (13), wherein the branch line (36) is fluidically connected to at least one lubrication point on the tensioning device (10), in particular a bearing point (37) of the tensioning means (19) and/or to at least one bearing point (38) of the additional lever (16), wherein, preferably, the branch line (36) comprises an, in particular controllable, non-return valve (39) or an, in particular adjustable, pressure limiting valve (39).

4. Agricultural baler (2) according to either of Claims 2 and 3, **characterized in that** at least one further lubricant outlet (34b-n) of the at least two lubricant outlets (34a-n) of the lubricant distributor unit (31) is fluidically connected to a lubrication point of the agricultural baler (2) by means of a further lubricant distribution line (35b-n).

5. Agricultural baler (2) according to one of Claims 1 to 4, **characterized in that** the lubricant inlet (22) of the piston-cylinder unit (13) for supplying the lubricant is designed as a lubricating nipple, wherein the lubricant can be supplied to the piston-cylinder unit (13) via the lubricating nipple by means of a grease gun (40) .

6. Agricultural baler (2) according to one of Claims 1 to 5, **characterized in that** the piston-cylinder unit (13) comprises a lubricant outlet (25) for discharging at least some of the lubricant from the piston-cylinder unit (13), wherein the lubricant outlet (25) comprises a, preferably controllable, non-return valve (26) or a, preferably adjustable, pressure-limiting valve (26).

7. Agricultural baler (2) according to Claim 6, **characterized in that** the lubricant outlet (25) of the piston-cylinder unit (13) is fluidically connected to at least one lubrication point on the tensioning device (10), in particular to a bearing point (37) of the tensioning means (19) and/or to at least one bearing point (38) of the additional lever (16).

8. Agricultural baler (2) according to one of Claims 1 to 7, **characterized in that** the agricultural baler (2) comprises a control device which is configured to selectively actuate the valve (23) in the lubricant inlet (22) of the piston-cylinder unit (13), the valve (26) in the lubricant outlet (25) of the piston-cylinder unit (13), the valve (39) in the branch line (36) branching off from the lubricant distribution line (35a), and/or the lubricant container (29), the lubricant pump (30) and/or the lubricant distributor unit (31) of the central lubrication system (28) in accordance with a predefinable or predefined stipulation.

9. Agricultural baler (2) according to one of Claims 1 to 8, **characterized in that** the tensioning member (12) comprises a tensioning spring (27) which is arranged between a cylinder (14) and the piston (15) of the piston-cylinder unit (13).

10. Agricultural baler (2) according to one of Claims 1 to 9, **characterized in that** the agricultural baler (2) comprises a multiplicity of traction mechanism drives (9) each having at least one tensioning device (10).

11. Agricultural baler (2) according to one of Claims 1 to 10, **characterized in that** the at least one traction mechanism drive (9) is a belt drive and the tensioning means (19) of the tensioning device (10) is a belt tensioning pulley.

12. Agricultural baler (2) according to one of Claims 1 to 11, **characterized in that** the at least one traction mechanism drive (9) is a chain drive and the tensioning means (19) of the tensioning device (10) is a chain tensioning sprocket.

13. Combination of an agricultural working machine (1), in particular a tractor, and an agricultural baler (2) pulled by the latter, **characterized in that** the agricultural baler (2) is designed according to one of Claims 1 to 12.

## Revendications

1. Presse à balles agricole (2) comprenant au moins un entraînement par moyen de traction (9) pour entraîner des unités de travail de la presse à balles agricole (2), au moins un appareil de serrage (10) étant associé à l'entraînement par moyen de traction (9), l'au moins un appareil de serrage (10) comprenant un élément de serrage (12) pour régler une force de serrage exercée au moyen de l'appareil de serrage (10) sur un moyen de traction (11) de l'au moins un entraînement par moyen de traction (9),
l'élément de serrage (12) comprenant une unité piston-cylindre (13), un piston (15) de l'unité piston-cylindre (13) étant relié directement ou indirectement, par l'intermédiaire d'un levier supplémentaire (16), à un moyen de serrage (19) de l'appareil de serrage (10), par l'intermédiaire duquel la force de serrage est appliquée au moyen de traction (11) de l'au moins un entraînement par moyen de traction (9), l'unité piston-cylindre (13) pouvant être alimentée en un lubrifiant, de préférence en une graisse lubrifiante, pour régler la force de serrage exercée sur le moyen de traction (11) , l'unité piston-cylindre (13) comprenant une entrée de lubrifiant (22) pour l'alimentation en lubrifiant, l'entrée de lubrifiant (22) comprenant un clapet anti-retour (23), de préférence commandable, **caractérisée en ce que** la presse à balles agricole (2) comprend un système de lubrification central (28) qui est relié en écoulement à l'entrée de lubrifiant (22) de l'unité piston-cylindre (13) pour l'alimentation en lubrifiant.

2. Presse à balles agricole (2) selon la revendication 1, **caractérisée en ce que** le système de lubrification central (28) comprend au moins un réservoir de lubrifiant (29), une pompe à lubrifiant (30) et une unité de distribution de lubrifiant (31), la pompe à lubrifiant (30) étant reliée en écoulement à la fois au réservoir de lubrifiant (29) et à l'unité de distribution de lubrifiant (31), l'unité de distribution de lubrifiant (31) comportant une entrée de lubrifiant (32) qui est reliée en écoulement à la pompe à lubrifiant (30) au moyen d'une conduite principale de lubrifiant (33) et au moins deux sorties de lubrifiant (34a-n), une sortie de lubrifiant (34a) des au moins deux sorties de lubrifiant (34a-n) étant reliée en écoulement à l'entrée de lubrifiant (22) de l'unité piston-cylindre (13) par une conduite de distribution de lubrifiant (35a).

3. Presse à balles agricole (2) selon la revendication 2, **caractérisée en ce que** la conduite de distribution de lubrifiant (35a) reliant la sortie de lubrifiant (34a) de l'unité de distribution de lubrifiant (31) à l'entrée de lubrifiant (22) de l'unité piston-cylindre (13) comprend une conduite de bifurcation (36) qui bifurque de la conduite de distribution de lubrifiant (35a) de préférence immédiatement avant l'entrée de lubrifiant (22) de l'unité piston-cylindre (13), la conduite de bifurcation (36) étant reliée en écoulement à au moins un point de lubrification sur l'appareil de serrage (10), en particulier un point d'appui (37) du moyen de serrage (19) et/ou au moins un point d'appui (38) du levier supplémentaire (16), la conduite de bifurcation (36) comprenant de préférence un clapet anti-retour (39) en particulier commandable ou une soupape de limitation de pression (39) en particulier réglable.

4. Presse à balles agricole (2) selon l'une des revendications 2 ou 3, **caractérisée en ce qu'**au moins une autre sortie de lubrifiant (34b-n) parmi les au moins deux sorties de lubrifiant (34a-n) de l'unité de distribution de lubrifiant (31) est reliée en écoulement, au moyen d'une autre conduite de distribution de lubrifiant (35b-n), à un point de lubrification de la presse à balles agricole (2).

5. Presse à balles agricole (2) selon l'une des revendications 1 à 4, **caractérisée en ce que** l'entrée de lubrifiant (22) de l'unité piston-cylindre (13) pour l'alimentation en lubrifiant est conçue comme un graisseur, le lubrifiant pouvant être alimenté via le graisseur au moyen d'une pompe à graisse (40) de l'unité piston-cylindre (13).

6. Presse à balles agricole (2) selon l'une des revendications 1 à 5, **caractérisée en ce que** l'unité piston-cylindre (13) comprend une sortie de lubrifiant (25) pour évacuer au moins une partie du lubrifiant de l'unité piston-cylindre (13), la sortie de lubrifiant (25) comprenant un clapet anti-retour (26), de préférence commandable, ou une soupape de limitation de pression (26) de préférence réglable.

7. Presse à balles agricole (2) selon la revendication 6, **caractérisée en ce que** la sortie de lubrifiant (25) de l'unité piston-cylindre (13) est reliée en écoulement à au moins un point de lubrification sur l'appareil de serrage (10), en particulier un point d'appui (37) du moyen de serrage (19) et/ou au moins un point d'appui (38) du levier supplémentaire (16).

8. Presse à balles agricole (2) selon l'une des revendications 1 à 7, **caractérisée en ce que** la presse à balles agricole (2) comprend un appareil de commande qui est conçu pour actionner au choix la soupape (23) dans l'entrée de lubrifiant (22) de l'unité piston-cylindre (13), la soupape (26) dans la sortie de lubrifiant (25) de l'unité piston-cylindre (13), la soupape (39) dans la conduite de bifurcation (36) bifurquant de la conduite de distribution de lubrifiant (35a) et/ou le réservoir de lubrifiant (29), la pompe à lubrifiant (30) et/ou l'unité de distribution de lubrifiant (31) du système de lubrification central (28) conformément à une spécification prédéfinie ou pouvant être prédéfinie.

9. Presse à balles agricole (2) selon l'une des revendications 1 à 8, **caractérisée en ce que** l'élément de serrage (12) comprend un ressort de serrage (27) qui est disposé entre un cylindre (14) et le piston (15) de l'unité piston-cylindre (13).

10. Presse à balles agricole (2) selon l'une des revendications 1 à 9, **caractérisée en ce que** la presse à balles agricole (2) comprend une pluralité d'entraînements par moyen de traction (9) avec chacun au moins un appareil de serrage (10).

11. Presse à balles agricole (2) selon l'une des revendications 1 à 10, **caractérisée en ce que** l'au moins un entraînement par moyen de traction (9) est un entraînement par courroie et le moyen de serrage (19) de l'appareil de serrage (10) est un galet tendeur de courroie.

12. Presse à balles agricole (2) selon l'une des revendications 1 à 11, **caractérisée en ce que** l'au moins un entraînement par moyen de traction (9) est un entraînement par chaîne et le moyen de serrage (19) de l'appareil de serrage (10) est une roue de serrage de chaîne.

13. Combinaison d'une machine de travail agricole (1), en particulier d'un tracteur, et d'une presse à balles agricole (2) tractée par celle-ci, **caractérisée en ce que** la presse à balles agricole (2) est conçue selon l'une des revendications 1 à 12.
